Europäisches Patentamt

European Patent Office

Office européen des brevets

(19)

(11) Veröffentlichungsnummer : **0 259 567**
**B1**

(12) # EUROPÄISCHE PATENTSCHRIFT

(45) Veröffentlichungstag der Patentschrift :
07.03.90

(21) Anmeldenummer : 87110039.2

(22) Anmeldetag : 11.07.87

(51) Int. Cl.⁵ : **B 29 C 47/10**, B 01 F 15/04

(54) **Dosiergerät zum Dosieren von Zuschlagstoffen.**

(30) Priorität : 19.08.86 DE 3628146

(43) Veröffentlichungstag der Anmeldung :
16.03.88 Patentblatt 88/11

(45) Bekanntmachung des Hinweises auf die Patenterteilung : 07.03.90 Patentblatt 90/10

(84) Benannte Vertragsstaaten :
BE ES FR GB IT NL

(56) Entgegenhaltungen :
DE--A-- 3 417 316
FR--A-- 2 059 870
GB--A-- 1 565 812

(73) Patentinhaber : **Bollschweiler, Reinhold**
**Lückhoffstrasse 8**
**D-1000 Berlin 38 (DE)**

(72) Erfinder : **Bollschweiler, Reinhold**
**Lückhoffstrasse 8**
**D-1000 Berlin 38 (DE)**

(74) Vertreter : **Beyer, Rudi**
**Patentanwalt Dipl.-Ing. Rudi Beyer Am Dickelsbach 8**
**D-4030 Ratingen 6 (Hösel) (DE)**

## Beschreibung

### Gattung

Die Erfindung betrifft ein Dosiergerät zum Dosieren von Zuschlagstoffen wie Masterbatch (Farbkonzentraten), regenerierten Materialien, Mahlgut, Granulaten oder sonstigen leicht fließenden Materialien und Hauptmaterialien, zu einem einer Verarbeitungsmaschine z. B. mittels eines Haupttrichters und einer Hauptförderschnecke zugeführten Verarbeitungsmaterial, wobei z. B. zwischen dem Haupttrichter und der Hauptschnecke vorzugsweise ein Halsstück angeordnet ist, an welchem mindestens ein Dosiergerät abnehmbar angebaut ist, welches eine in einem Zylinder eingebaute Förderschnecke, einen stufenlos regelbaren Motor zum Antrieb der Förderschnecke und einen Trichter aufweist, wobei das Gehäuse des Dosiergeräts eine mit einer in dem Gehäuse angeordneten Ausnehmung fluchtende, verschließbare Probeentnahmeöffnung aufweist und die Förderschnecke das zudosierte Material über eine Zuführvorrichtung durch eine in dem Halsstück angeordnete, mit der Zuführvorrichtung fluchtende Anschlußöffnung in das Halsstück hineinfördert.

### Stand der Technik

Aus der DE-A-3 417 316 ist ein verschiebbarer Ventilkopf mit Auslaßöffnung zwecks Unterbindung der Rückführung von unerwünschtem Material in den Hauptextruder vorbekannt. Derartige Dosiergeräte werden eingesetzt um Masterbatch (Farbkonzentrat), regeneriertes Material, Mahlgut oder sonstiges leicht fließendes Material mit einem Hauptmaterial (Verarbeitungsmaterial) zu vermischen. Bei dem aus dem Prospekt « Plasticolor-Dosiergerät » entnehmbaren Dosiergerät nach dem Oberbegriff des Anspruches 1 wird das Halsstück an der Produktionsmaschine unter dem vorhandenen Trichter montiert. Die Förderschnecke preßt das zu dosierende Material in das Verarbeitungsmaterial, während dieses durch das Halsstück fließt. Im Zylinder der Produktionsmaschine werden die Materialien fertig homogenisiert. Durch dieses Prinzip wird eine gleichmäßige Mischung erzielt. Durch den kurzen Abstand zwischen Halsstück und der Verarbeitung ist eine Entmischung unmöglich. Auf diese Weise lassen sich z. B. vier solcher Dosiergeräte an einem Halsstück montieren, um gleichzeitig verschiedene Zusatzmaterialien zu dosieren. Eine solche Mischanlage aus mehreren Dosiergeräten kann auch zusammen mit einem darunter montierten Materialbehälter frei aufgestellt werden. Aus dem Materialbehälter können dann über Saugförderer mehrere Maschinen mit der gleichen Mischung versorgt werden. Die Schneckendrehzahl kann z. B. über eine Thyristorsteuerung mit hoher Genauigkeit gesteuert werden. Es ist ferner möglich, z. B. fünf sehr leicht austauschbare Schnecken verschiedener Größen und durch drei verschiedene Motorgrößen einen Kapazitätsbereich von z. B. 0,2 bis 700 kg/h durch das Dosiergerät dem Verarbeitungsmaterial zuzufördern.

Die Einfärbung des zu fördernden Verarbeitungsmaterials durch mindestens ein zum Stande der Technik gehörendes Dosiergerät bringt im wesentlichen folgende Vorteile :

weniger Lagerung — nur unvermischte Materialien und Masterbatch

kein engefärbtes Material bleibt im Lager übrig keine Einfärb-Abteilung in der Fabrik

sehr schneller Farbwechsel — kurze Totzeiten

vollautomatischer Materialfluß durch zusätzliche Fördersysteme möglich

Die richtige Menge Masterbatch wird durch Einstellung der Motordrehzahl erzielt. Dies erfolgt durch Kontrolle des Endproduktes und durch Nachregulieren, bis der gewünschte Farbton genau erreicht ist. Hierzu ist es erforderlich, durch die Probeentnahmeöffnung Proben zur Mengenkontrolle des durch das Dosiergerät dem Hauptförderstrom (Verarbeitungsmaterial) zugeführten Masterbatch zu kontrollieren, um für das jeweils benötigte Material eine optimale Einstellung der Motordrehzahl zu erzielen (volumetrische Dosierung).

Es hat sich jedoch gezeigt, daß die an dem Gehäuse des Dosiergeräts vorhandene, meist unten liegende Öffnung und die damit korrespondierende Öffnung im Zylinder den Förderstrom im Zylinder des Gehäuses stören.

Außerdem sind die Verhältnisse im Bereich der Probeentnahmeöffnung, die sich meist im mittleren Längenbereich des Gehäuses befindet, nicht unbedingt dieselben wie an der Stelle, in der die Förderschnecke in den Hauptförderstrom (Verarbeitungsmaterial) austrägt, so daß ein mehrmaliges Nachregulieren erforderlich sein könnte.

Beim Farbwechseln sind unter Umständen langwierige und nachteilige Säuberungsarbeiten erforderlich, da schon geringfügige Mengen eines Farbstoffes erhebliche Mengen des Verarbeitungsmaterials unbrauchbar machen können, wenn Farbstoffreste ungewollt in das Verarbeitungsmaterial hineingelangen sollten. Dies kann insbesondere auch dann vorkommen, wenn bei der Anordnung mehrerer Dosiergeräte durch Umschalten von einem Masterbatch auf das andere Masterbatch angeklebtes Farbkonzentrat in das Verarbeitungsmaterial ungewollt hineingelangen.

Es sind auch Geräte bekannt, bei denen man ein Halsstück zunächst abnehmen muß, um Tests durchzuführen, was sehr umständlich erscheint.

### Aufgabe

Der Erfindung liegt die Aufgabe zugrunde, die Nachteile des Standes der Technik zu beseitigen und ein Dosiergerät zu schaffen, das eine Probeentnahme unter realistischen Betriebsbedingungen ermöglicht und darüber hinaus sicherstellt, daß nicht ungewollt z. B. Masterbatchreste in das Verarbeitungsmaterial hineingelangen können, auch dann nicht, wenn bei Anordnung mehrerer Dosiergeräte von z. B. dem einen Masterbatch auf das andere umgeschaltet wird.

Lösung

Ausgehend von einem Dosiergerät der gattungsgemäß vorausgesetzten Art wird diese Aufgabe durch die in Patentanspruch 1 wiedergegebenen Merkmale gelöst.

Einige Vorteile

Dadurch, daß die Probeentnahme genau an der
Stelle erfolgt, in der die Förderschnecke in den
Hauptförderstrom austrägt, also gewissermaßen
zwischen der Zuführöffnung des Gehäuses des
Dosiergerätes und der Anschlußöffnung des Halsstückes werden Proben unter realistischen Bedingungen entnommen. Man kann durch die Entnahme dieser Proben unmittelbar auf die tatsächliche
Mengenförderung in den Strom des Verarbeitungsmaterials, der sich im Halsstück bewegt,
schließen und hat dadurch ein exaktes Mittel, mit
dem sich z. B. die Drehzahl der Förderschnecke
so regeln läßt, daß die jeweils gewünschte Menge
von z. B. Masterbatch in das Verarbeitungsmaterial hineingefördert wird. Dadurch wird Ausschuß
vermieden und es werden sehr kurze Rüst- und
Regelzeiten erreicht.

Da außerdem die Probeentnahme gewissermaßen in der Ebene zwischen der Zuführöffnung des
Gehäuses des Dosiergerätes und der Anschlußöffnung des Halsstückes erfolgt, kann ein Absperrorgan schieberartig ausgebildet sein und mit absoluter Sicherheit diese beiden Öffnungen gewünschtenfalls voneinander trennen, so daß selbst
geringe Mengen von z. B. Masterbatch nicht
mehr ungewollt in das Verarbeitungsmaterial hineingelangen können. Auf diese Weise ist es mit
einem erfindungsgemäßen Dosiergerät also nicht
nur möglich, unter realistischen Bedingungen
Proben zu entnehmen und die Zuführung des
Masterbatch danach zu regeln, sondern es ist
nunmehr auch möglich, Mischstationen herzustellen, bei denen z. B. vier oder sechs Dosiergeräte — gewissermaßen sternförmig — an einem
Halsstück angeordnet werden, die sämtlich erfindungsgemäß ausgestaltet werden. Durch Fernsteuerung lassen sich die Absperrorgane — z. B.
von einem zentralen Bedienungspult aus —
steuern, so daß blitzschnell von z. B. einem Masterbatch auf das andere umgeschaltet werden
kann und sozusagen in fliegendem Wechsel die
Einfärbung des Verarbeitungsmaterials zu ändern
ist, und zwar ohne das zwischendurch Ausschuß
produziert wird.

Alles in allem ist bei der Erfindung stets eine
ungestörte Förderung ermöglicht, da gewissermaßen durch Knopfdruck nicht nur Mengentests
durchzuführen sind, sondern auch die Zuführung
von z. B. einem Masterbatch auf das andere
geändert werden kann. Bei der Erfindung entfällt
auch die mittlere Probeentnahmeöffnung, so daß es hier zu keinen Fließstörungen mehr kommt.

Ein erfindungsgemäßes Gerät kann nicht nur
als Dosiergerät für Zuschlagstoffe wie Mahlgut,
Masterbatch oder Regenerat, sondern auch als
Dosiergerät für die Hauptmaterialien dienen. Es ist
sogar möglich, den Haupttrichter auf dem Halsstück wegzulassen und alle Komponenten über
ein erfindungsgemäßes Dosiergerät oder mehrere
Dosiergeräte zuzuführen. Das Absperrorgan, z. B.
ein Schieber, kann auf jede nur erdenkliche Art,
z. B. motorisch, pneumatisch, hydraulisch, aber
auch manuell von Hand, betätigbar ausgebildet
sein. In der Automatisation hat das Absperrorgan,
z. B. ein Schieber, nicht nur Vorteile beim Umschalten von einem Gerät auf ein anderes, z. B.
von einer Farbe auf eine andere, sondern es ist
auch bei einem einzelnen Gerät, das z. B. an
einem Halsstück angeordnet ist, möglich, das
Absperrorgan, z. B. den Schieber, umzustellen,
um z. B. von farbiger Folie auf ungefärbte umzustellen, d. h. ohne Dosiergerät zu fahren. Ohne
ein Absperrorgan, z. B. einen Schieber, würde
das Material aus dem Zylinder « nachrieseln ».

Im übrigen ist durch die besondere Konstruktion des Schiebers nunmehr auch sichergestellt,
daß bei Umstellung des Geräts von einem Masterbatch auf das andere keine Körner mehr zwischen
Wandungen eingeklemmt werden können, die
insbesondere beim Farbwechsel zum Ausschuß
führen könnten.

Bei der erfindungsgemäßen Lösung gemäß Patentanspruch 2 erfolgt die Verstellung des Absperrorgans über einen Verstellzylinder, der beispielsweise als abwechselnd beidseitig mit Druckmitteldruck, insbesondere pneumatisch, zu beaufschlagender, fernsteuerbarer Zylinder ausgebildet ist,
mit dem das Absperrorgan, z. B. ein Schieber,
gekuppelt ist.

In der Zeichnung ist die Erfindung — teils
schematisch — an mehreren Ausführungsbeispielen veranschaulicht. Es zeigen :

Fig. 1 Ein Dosiergerät nach dem Stand der
Technik, teils in der Seitenansicht, teils im
Schnitt, teils abgebrochen dargestellt ;

Fig. 2 Eine weitere Ausführungsform nach dem
Stand der Technik, ebenfalls in der Seitenansicht ;

Fig. 3 Eine Einzelheit aus einem erfindungsgemäßen Dosiergerät, teils im Schnitt, teils in der
Seitenansicht und zum Teil abgebrochen dargestellt, im größeren Maßstab ;

Fig. 4 Eine Seitenansicht zu Fig. 3, teils im
Schnitt ;

Fig. 5 Einen Deckel mit Entleerungskanal, teils
in der Seitenansicht, teils im Schnitt ;

Fig. 6 Eine Seitenansicht zu Fig. 5 ;

Fig. 7 Eine Schieberführung, teils in der Draufsicht, teils im Schnitt ;

Fig. 8 Eine Seitenansicht zu Fig. 7, teils im
Schnitt ;

Fig. 9 Eine Halsstück in der Seitenansicht ;

Fig. 10 Einen Deckel im Schnitt ;

Fig. 11 Eine Seitenansicht zu Fig. 10 ;

Fig. 12 Einen Schieber in der Draufsicht und

Fig. 13 Einen Längsschnitt zu Fig. 12.

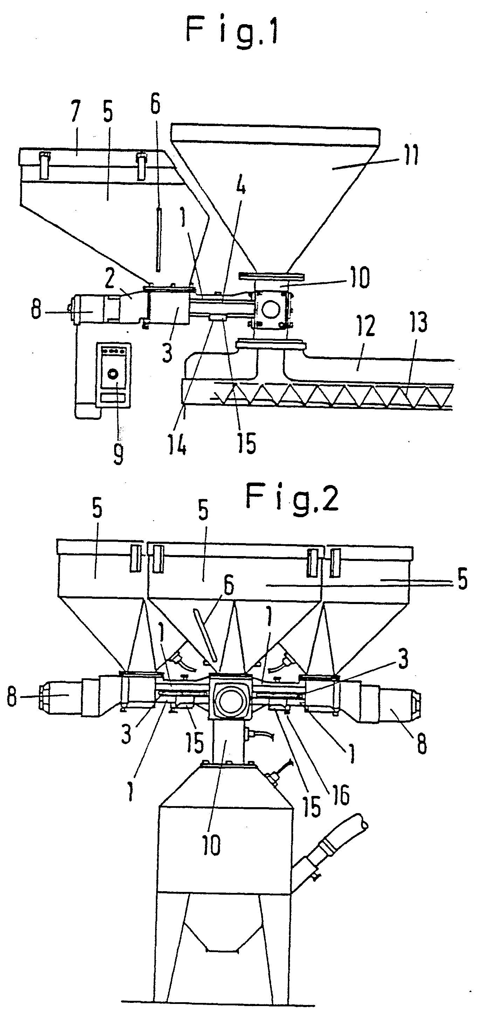

Fig. 1 zeigt ein bekanntes Dosiergerät, wie es in dem Prospekt « PLASTICOLOR-Dosiergerät » der Firma Woywod-Plastore, Gräfelfing, dargestellt ist. Das Dosiergerät besteht aus einem Gehäuse 1 mit Motorkonsole 2, Förderschnecke 3 und Zylinder 4 sowie aus einem Trichter 5 mit Schauglas 6 und einer Abdeckung 7 sowie aus einem regelbare Getriebemotor 8 und einer elektronischen Steuerung 9 für hohe Genauigkeit.

Zur Änderung der Leistungsstufen können verschiedene Zylinder 4 in dem Gehäuse 1 angeordnet werden, denen jeweils verschiedene Förderschnecken 3 zugeordnet werden, was im einzelnen aber aus der Zeichnung nicht hervorgeht. Dadurch kann z. B. der Leistungsbereich von z. B. 0,2 bis 700 kg/h in Spezialfällen sogar bis 4.000 kg/h an zu dosierendem Masterbatch variiert werden. Dieses Masterbatch wird dem Trichter 5 durch einen nicht dargestellten Förderer zugefördert.

Das Gehäuse 1 ist an ein Halsstück 10 angeflanscht, welches in einfacher Weise zwischen einem Haupttrichter 11 und einem Extrudergehäuse 12 einer Hauptschnecke 13 angeordnet, insbesondere angeflanscht, ist.

Zur Grundausstattung des Dosiergerätes können weiterhin ein Motorschutzschalter sowie ein Ein- und Ausschalter und für alle nicht kontinuierlich laufenden Maschinen eine Intervall-Schaltung gehören, was ebenfalls im einzelnen nicht näher veranschaulicht ist. Dabei kann der elektrische Impuls, der die Hauptschnecke 13 startet, auch zum Anlaufen des Getriebemotors 8 verwendet werden. Über ein eingebautes, nicht dargestelltes Relais kann die Laufzeit dieses Dosiergeräts pro Impuls stufenlos reguliert werden.

Zum Anbau an eine Verarbeitungsmaschine wird das Halsstück 10 zwischen das Extrudergehäuse 12 der Hauptschnecke 13 und den Haupttrichter 11 eingesetzt. Dieses Halsstück 10 kann einen quadratischen Querschnitt haben. Es sind jedoch auch andere Querschnittsformen im Bedarfsfalle denkbar, insbesondere wenn um den Umfang des Halsstückes 10 herum zahlreiche solcher Dosiergeräte angeordnet werden. So ist es auch beispielsweise möglich, das Halsstück 10 im Querschnitt polygonförmig auszubilden.

Zum Austausch der Förderschnecke 3 wird die Motorkonsole 2 vom Gehäuse 1 weggeklappt. Dieser Austausch und damit der Wechsel in einen anderen Leistungsbereich dauert nur sehr kurze Zeit, z. B. nur einige wenige Minuten. Im mittleren unteren Längenbereich des Gehäuses 1 ist eine Probeentnahmeöffnung 14 angeordnet, die über einen Deckel 15 verschließbar ist, der durch eine Rändelschraube gehalten wird.

Der Zylinder 4 der Förderschnecke 1 besitzt in diesem Bereich eine entsprechende Aussparung, die mit der Probeentnahmeöffnung 14 fluchtet, was allerdings aus der Zeichnung nicht hervorgeht. Nach Öffnen der Rändelschraube und nach Wegschwenken des Deckels 15 kann an dieser Stelle von der Förderschnecke 3 gefördertes Masterbatch entnommen werden. Dadurch ist es möglich, die von der Förderschnecke 3 geförderte Masterbatchmenge zu kontrollieren und den Getriebemotor 8 entsprechend zu regeln, bis die gewünschte Zumischung in das Halsstück 10 erreicht ist.

Bei der Ausführungsform nach Fig. 2, die ebenfalls dem genannten Prospektblatt zu entnehmen ist, sind für Teile gleicher Funktion die gleichen Bezugszeichen verwendet worden.

Bei dieser Ausführungsform sind über den Umfang des Halsstückes 10 vier Dosiergeräte angeordnet, d. h. daß im Abstand von 90 Grad über den Umfang des Halsstückes 10 vier Gehäuse 1 an das Halsstück 10 angeflanscht sind, wobei die Einzelteile der Dosiervorrichtung prinzipiell wie die der Dosiervorrichtung gemäß Fig. 1 ausgestaltet sein können. Dadurch können vier verschiedene Materialien zudosiert und/oder miteinander gemischt und dem Verarbeitungsmaterial im Halsstück 10 zugefördert werden. Die Trichter 5 der Dosiergeräte können über Saugförderanlagen gefüllt werden.

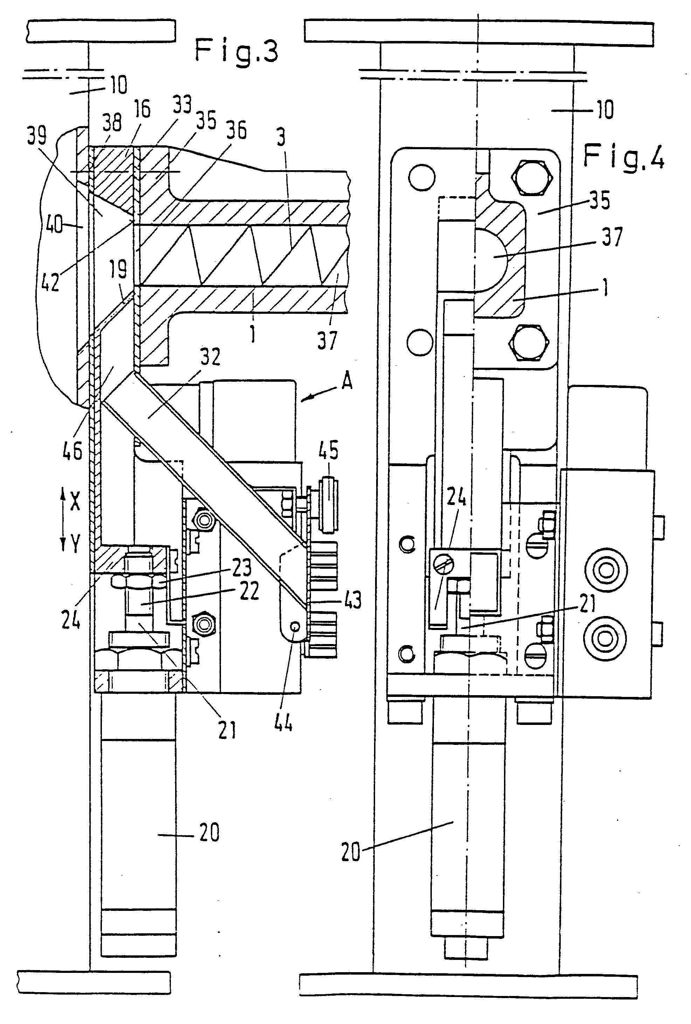

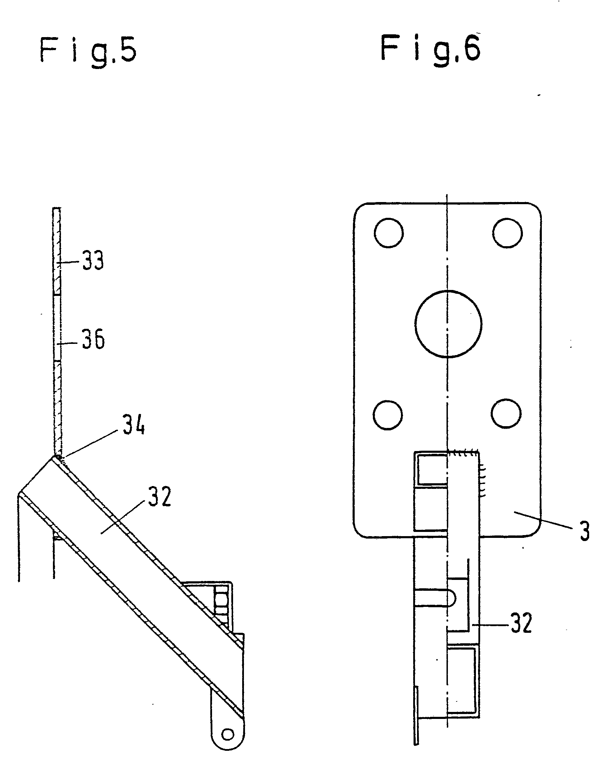

Bei der aus den Fig. 3 bis 13 ersichtlichen, gemäß der Erfindung ausgestalteten Ausführungsformen sind ebenfalls für Teile gleicher Funktionen die gleichen Bezugszeichen wie bei den vorbeschriebenen Dosiergeräten verwendet worden.

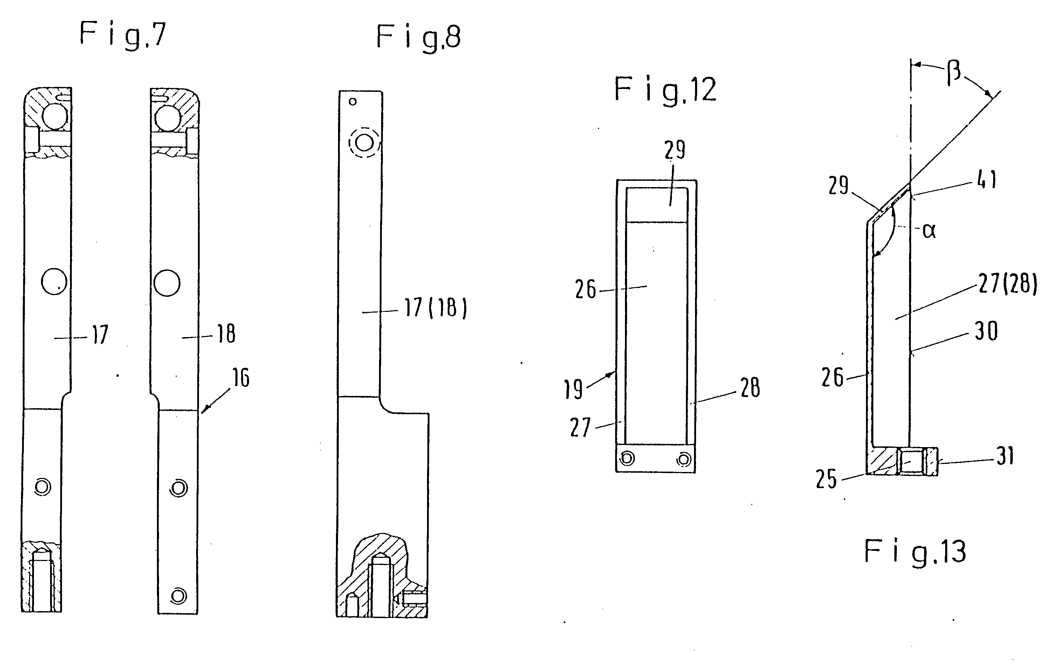

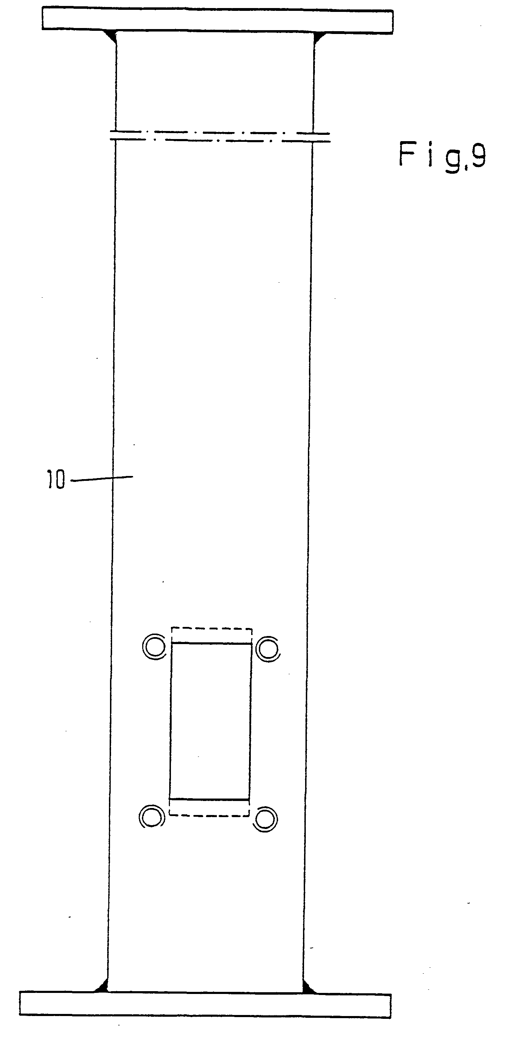

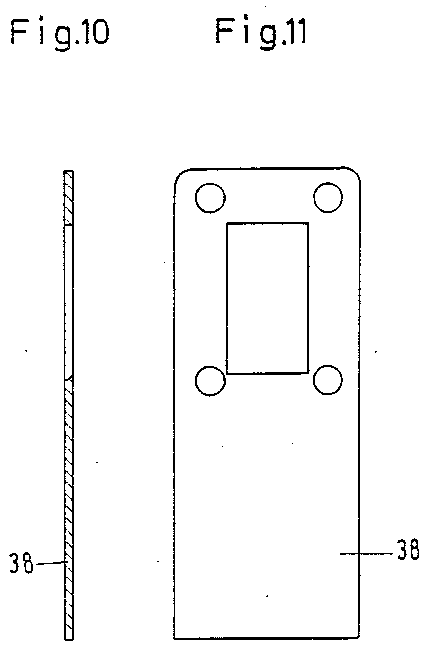

Wie insbesondere die Fig. 3 erkennen läßt, ist zwischen dem Gehäuse 1 des nicht näher dargestellten Dosiergerätes und dem Halsstück 10 eine als Gabelstück ausgebildete Schieberführung 16 (Fig. 7, 8) angeordnet, die aus zwei mit Abstand sowie parallel zueinander angeordneten Schieberführungsteilen 17 und 18 besteht, die durch mehrere nicht dargestellte Schrauben mit der Wand des Halsstückes 10 verschraubt sind und zwischen denen ein Schieber 19 um ein begrenztes Maß in vertikaler Richtung, also in Richtung X bzw. Y (Fig. 3) verschieblich ist, und zwar durch eine Verstellzylindereinheit 20, die abwechselnd beidseitig durch Druckluft zu beaufschlagen und — was nicht aus der Zeichnung hervorgeht — fernsteuerbar ist. Eine Kolbenstange 21 ist mit dem nicht dargestellten Kolben der Verstellzylindereinheit 20 an ihrem einen Ende verbunden und an ihrem anderen Ende 22 mit einer Mutter 23 lösbar versehen. Der Schieber 19 weist an seinem unteren Ende einen waagerecht abgekröpften Rand 24 mit Einschraubbohrung 25 für das Kolbenstangenende 22 auf. Ansonsten besteht der Schieber 19 aus einem Boden 26 sowie dazu rechtwinklig verlaufenden und parallel zueinander gerichteten Seitenwänden 27, 28, die an der einen Seite durch den rechtwinklig zum Boden 26 verlaufenden Rand 24 und an der anderen Seite durch eine unter einem stumpfen Winkel α zum Boden 26 verlaufende Stirnwand 29 begrenzt werden. Sowohl die Stirnwand 29 als auch die Seitenwände 27 und 28 enden in der gleichen Höhenebene 30, die bei der dargestellten Ausführungsform unterhalb der durch die seitwertige Begrenzung 31 des Randes 24 endet. Der Winkel β beträgt bei der dargestellten Ausführungsform 45 Grad. Durch diese Ausbildung des Schiebers 19 entsteht ein hohlkastenförmiges Gebilde, an dessen Innenraum 46 in jeder Stellung des Schiebers 19 ein als Profilrohr ausgebildeter Entleerungskanal 32 angeschlossen ist, der mit einem Blech 33 durch Schweißnähte 34 einstückig verbunden ist. Das Blech 33 ist zwischen der Schieberführung 16 und einem Flansch 35 des Gehäuses 1 befestigt, was durch Schrauben geschieht, die in Fig. 3 lediglich durch strichpunktierte Mittellinien angedeutet sind. Das Blech 33 weist eine etwa mittlere Öffnung 36 auf, die mit dem Zylinderraum 37 des Gehäuses 1 fluchtet. Die Öffnung 36 erweitert sich in Richtung auf einen Deckel 38 (Fig. 10, 11), der zusammen mit dem Gehäuse 35, dem Blech 33 und der Schieberführung 16 durch die gleichen Schrauben am Halsstück 10 gehaltert ist und dadurch für einen gewissen Randabstand des Dosiergeräts von der Seitenwand des Halsstückes 10 sorgt. Mit der Öffnung 39 fluchtet eine Öffnung 40 in der Seitenwand des Halsstückes 10, so daß das von der Förderschnecke 3 geförderte Masterbatch durch die Öffnung 36, 39, 40 in das im Halsstück 10 in Richtung Y strömende Verarbeitungsmaterial hineingefördert wird.

Wird die Verstellzylindereinheit 20 in Richtung X beaufschlagt, so hat dies eine entsprechende Verschiebung des Schiebers 19 zur Folge, derart, daß der Randbereich 41 hinter der Schulter 42 (Fig. 3) zu liegen kommt. In dieser Stellung des Schiebers 19 ist der Zylinderraum 37 des Gehäuses 1 von der Öffnung 39 vollkommen abgeschlossen, so daß von der Förderschnecke 13 gefördertes Masterbatch über den Innenraum des Schiebers 19 in den Entleerungskanal 32 gelangt. Nach Öffnen einer Verschlußklappe 43 über eine von Hand zu betätigende Mutter 45 und Wegschwenken der Verschlußklappe 43 um die horizontal verlaufende Achse 44 kann aus dem Entleerungskanal 32 zur Mengenkontrolle Masterbatch entnommen werden, auch dann, wenn die Anlage weiterlaufen sollte, d. h. wenn z. B. über andere am Halsstück 10 montierte Dosiergeräte andere Materialien in das Halsstück 10 hineingefördert werden sollten.

Nach der Probeentnahme kann bei geschlossenem Schieber 19 das Dosiergerät wieder anlaufen, so daß das geförderte Material unmittelbar vor dem Schieber 19 ansteht, d. h. nach Schieberöffnung praktisch verzögerungsfrei Material in das Halsstück 10 hineingefördert werden kann. Beim zum Stande der Technik gehörenden Geräten konnte hier eine relativ lange Zeitspanne verloren gehen, bis wieder Material in das Halsstück 10 hineingefördert werden konnte.

Man erkennt deutlich, daß bei der erfindungsgemäßen Lösung das durch das Dosiergerät herangeförderte Material nach der Förderschnecke 3 zur Mengenkontrolle entnommen werden kann, so daß die Mengenkontrolle an einer Stelle erfolgt, wo praktisch die Verhältnisse im Halsstück 10 vorliegen. Dadurch ist eine bessere Regulierung des zuzuführenden Masterbatch möglich.

**Patentansprüche**

1. Dosiergerät zum Dosieren von Zuschlagstoffen wie Masterbatch (Farbkonzentraten), regenerierte Materialien, Mahlgut, Granulaten oder sonstigen leicht fließenden Materialien und Hauptmaterialien, zu einem einer Verarbeitungsmaschine mittels eines Haupttrichters (11) und einer Hauptförderschnecke (13) zugeführten Verarbeitungsmaterial, wobei zwischen dem Haupttrichter (11) und der Hauptschnecke (13) vorzugsweise ein Halsstück (10) angeordnet ist, an welchem mindestens ein Dosiergerät abnehmbar angebaut ist, welches eine in einem Zylinder (4) eingebaute Förderschnecke (3), einen stufenlos regelbaren Motor zum Antrieb der Förderschnecke (3) und einen Trichter (5) aufweist, wobei das Gehäuse (1) des Dosiergeräts eine mit einer in dem Gehäuse angeordneten Ausnehmung fluchtende, verschließbare Probeentnahmeöffnung (14) aufweist und die Förderschnecke (3) das zudosierte Material über eine Zuführvorrichtung durch eine in dem Halsstück (10) angeordnete, mit der Zuführvorrichtung fluchtende Anschlußöffnung in das Halsstück (10) hineinfördert, dadurch gekennzeichnet, daß zwischen der Zuführöffnung (36) des Gehäuses (1) und der Anschlußöffnung (40) des Halsstückes (10) ein Absperrorgang (19, 20) angeordnet ist, das in der einen Stellung (X) die Verbindung von der Zuführöffnung (36) zur Anschlußöffnung (40) unterbricht und statt dessen eine Verbindung des Zylinderraumes (37) des Gehäuses (1) zu einem Entleerungskanal (32) herstellt, der an einen Raum (39) hinter der Zuführöffnung (36) des Gehäuses (1) angeschlossen ist, während das Absperrorgan (19) in der anderen Stellung (Y) die Verbindung des Zylinderraumes (37) zum Inneren des Halsstückes (10) freigibt, wobei das Absperrorgan einen Schieber (19) aufweist, der als an nur einer Seite geöffneter Hohlkasten (46) ausgebildet ist, an den das Profilrohr des Entleerungskanals (32) in jeder Stellung des Schiebers (19) angeschlossen ist und daß der Schieber (19) in seiner Sperrstellung mit einem Randbereich (41) hinter einer Schulter (42) verschließend anliegt, wobei die obere Stirnwand (29) unter einem stumpfen Winkel ($\alpha$) zum Boden (26) des Schiebers (19) geneigt verläuft und diese Stirnwand (29) zu der Anschlußöffnung (40) des Halsstückes (10) hingeneigt ist, wobei der Schieber (19) in zwei senkrecht zueinander stehenden Ebenen durch Gleitführungen (17, 18 bzw. 33, 38) geführt ist.

2. Dosiergerät nach Anspruch 1, dadurch gekennzeichnet, daß das Absperrorgan (19) über eine abwechselnd beidseitig mit Druckmitteldruck, insbesondere mit Luftdruck, zu beaufschlagende Verstellzylindereinheit (20) verstellbar ist, die durch Fernsteuerung in die eine oder andere Lage zu steuern ist.

**Claims**

1. Dosing device for dosing additives such as Masterbatch (colour concentrates) regenerated materials, material which is to be ground, granulates or other easy flowing materials and main materials, to a processing material which is fed to a processing machine by means of a main hopper (11) and a main conveyor worm (13) whereby a neckpiece (10) is provided preferably in between the main hopper (11) and the main conveyor worm (13) and to which at least one dosing device is detachably connected which is equipped with a conveyor worm (3) located inside a cylinder (4), a steplessly adjustable motor (5), whereby the housing (1) of the dosing device is provided with a closable sample extraction orifice (14) which is in alignment with a recess provided in the housing and the conveyor worm (3) discharges the dosed material via a feeding facility through a connecting orifice provided in the neckpiece (10) which is in alignment with the feeding facility into the neckpiece (10), characterized in that, a shut-off device (19, 20) is located in between the feeding orifice (36) of housing (1) and the connecting orifice (40) of the neckpiece (10) which in the one position (X) interrupts the connection from the feeding orifice (36) to the connecting orifice (40) and instead of that establishes a connection of the cylinder chamber (37) of housing (1) to a drainage duct (32) which is connected to a chamber (39) behind the feeding orifice (36) of housing (1), whereas the shut-off device (19) in the other position (Y) releases the connection of the cylinder chamber (34) to the inside of the neckpiece (10), whereby the shut-off device is provided with a slider (19) which is in the form of a hollow box (46) which is only opened on one side to which the profiled pipe of the drainage duct (32) is connected in each position of the slider (19) and that the slider (19) in its closed position forms a seal with an edge area (41) behind a shoulder (42), whereby the upper front wall (29) runs at an obtuse angle ($\alpha$) to the bottom (26) of the slider (19) and this front wall (29) is inclined toward the connecting orifice (40) of the neckpiece (10) whereby the slider (19) is guided in two mutually-perpendicular levels through the slide guides (17, 18 or 33, 38).

2. Dosing device in accordance with claim 1, characterized in that, the shut-off device (19) is adjustable by means of a positioning cylinder unit (20) which is to be loaded alternatingly with average pressure, in particular with air pressure, which can be controlled by remote control in one position or the other.

**Revendications**

1. Appareil de dosage d'agrégats tels mélanges-mères (mélanges concentrés de colorants), de matériaux régénérés, de produits de mouture, de granulats et d'autres matériaux et matériaux principaux divers coulant bien, avec un matériau de transformation transporté jusqu'à une machine de transformation par le biais d'un entonnoir principal (11) et d'une vis sans fin principale (13), un col (10) étant intercalé entre l'entonnoir principal (11) et la vis sans fin principale (13), col contre lequel est rapporté amoviblement au moins un appareil doseur lequel présente une vis sans fin (3) incorporée dans un cylindre (4), un moteur réglable à volonté entraînant la vis sans fin (3) et un entonnoir (5), le boîtier (1) de l'appareil doseur présentant un orifice (14) obturable de prélèvement d'échantillons aligné avec un évidement ménagé dans le boîtier et la vis sans fin (3) introduisant dans le col (10) via un dispositif d'amenée le matériau additionné transitant par un orifice de raccordement aligné sur le dispositif d'alimentation, caractérisé en ce que entre l'orifice d'amenée (36) du boîtier (1) et l'orifice de raccordement (40) du col (10) se trouve un organe de fermeture (19, 20) lequel dans une position (X) interrompt la liaison entre l'orifice d'amenée (36) et l'orifice de raccordement (40) et à la place établit une liaison entre le volume cylindrique (37) du boîtier (1) et un canal de vidange (32) raccordé à un volume (39) situé derrière l'orifice d'amenée (36) du boîtier (1), tandis que l'organe de fermeture (19) dans l'autre position (Y) permet la liaison entre le volume cylindrique (37) et l'intérieur du col (10), ledit organe présentant un tiroir (19) en forme de caisson creux (46) ouvert sur seulement un côté et auquel le tuyau profilé du canal de vidange (32) est raccordé quelle que soit la position du tiroir (19), et en ce que le tiroir (19) en position fermée s'appuie périmétriquement (41) contre un épaulement (42) pour obturer, la paroi frontale supérieure (29) étant inclinée d'un angle obtus ($\alpha$) par rapport au fond (26) du tiroir (19) et ladite paroi frontale (29) étant inclinée en direction de l'orifice de raccordement (40) du col (10), le tiroir étant guidé dans deux coulisses (17, 18 et 33, 38) selon deux plans perpendiculaires l'un à l'autre.

2. Appareil de dosage selon la revendication 1, caractérisé en ce que l'organe de fermeture (19) est mobile sous l'effet d'un vérin de réglage (20) à double effet agissant sous la pression d'un fluide, en particulier sous la pression d'air comprimé, et dont le déplacement dans l'une ou l'autre position est télécommandé.

# Fig.1

# Fig.2

# Fig.3

# Fig.4

# Fig.5

# Fig.6

33

36

34

32

3

32

Fig.7

Fig.8

Fig.12

17

18

16

17 (18)

29

26

19

27

28

β

29

41

α

27(28)

30

26

25

31

Fig.13

EP 0 259 567 B1

Fig.9

10

Fig.10      Fig.11

38

38